(19) Europäisches Patentamt
European Patent Office
Office européen des brevets

(11) **EP 4 769 535 A1**

(12) **EUROPEAN PATENT APPLICATION**

(43) Date of publication:
**01.07.2026 Bulletin 2026/27**

(21) Application number: **25223884.5**

(22) Date of filing: **16.12.2025**

(51) International Patent Classification (IPC):
*H01M 4/136* (2010.01)    *H01M 4/1397* (2010.01)
*H01M 4/36* (2006.01)    *H01M 4/58* (2010.01)
*H01M 10/0525* (2010.01)

(52) Cooperative Patent Classification (CPC):
H01M 4/5825; H01M 4/136; H01M 4/1397;
H01M 4/366; H01M 10/0525

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 JP 2024232235**

(71) Applicant: **Toyota Jidosha Kabushiki Kaisha
Toyota-shi, Aichi-ken 471-8571 (JP)**

(72) Inventors:
• **ISHIGAKI, Yuki
Toyota-shi, 471-8571 (JP)**

• **KOSAKA, Daichi
Toyota-shi, 471-8571 (JP)**
• **MAHARA, Takanori
Toyota-shi, 471-8571 (JP)**
• **EGUCHI, Tatsuya
Kariya-shi, Aichi-ken, 448-8671 (JP)**
• **KIMIJIMA, Takeshi
Kariya-shi, Aichi-ken, 448-8671 (JP)**

(74) Representative: **Kuhnen & Wacker
Patent- und Rechtsanwaltsbüro PartG mbB
Prinz-Ludwig-Straße 40 A
85354 Freising (DE)**

(54) **POSITIVE ELECTRODE ACTIVE MATERIAL, BATTERY, AND METHOD FOR PRODUCING POSITIVE ELECTRODE ACTIVE MATERIAL**

(57) A positive electrode active material includes a plurality of secondary particles (2), wherein each of the secondary particles (2) includes a plurality of primary particles (1), each of the primary particles (1) contains an olivine-type phosphate compound, carbon (5) is attached to at least part of a surface of the primary particle (1), a cross-sectional surface of the secondary particle (2) includes a first region (2a) and a second region (2b), the first region (2a) includes a center of the secondary particle (2), the second region (2b) includes a surface of the secondary particle (2), a minimum circumscribed circle of the cross-sectional surface of the secondary particle (2) has a radius of D, the first region (2a) is a circle including a center of the minimum circumscribed circle and having a radius of 0.5D, a relationship of $1.1 \leq V_1/V_2$ is satisfied, the $V_1$ is a pore volume (cm$^3$/g) in the first region (2a), and the $V_2$ is a pore volume (cm$^3$/g) in the second region (2b).

FIG. 1

EP 4 769 535 A1

**Description**

BACKGROUND OF THE INVENTION

1. Field of the Invention

The present disclosure relates to a positive electrode active material, a battery, and a method for producing a positive electrode active material.

2. Description of Related Art

WO 2016/158566 discloses lithium manganese phosphate nanoparticles whose crystal orientation is not along a specific direction and whose crystallite size is 10 nm or more and 50 nm or less.

SUMMARY OF THE INVENTION

As positive electrode active materials, olivine-type phosphate compounds have been studied. Conventionally, coating primary particles of an olivine-type phosphate compound with carbon has been proposed to enhance electron conductivity. Further, WO 2016/158566 discloses that an enhancement in capacity is achieved by preventing crystal orientation in a specific direction. However, there is room for improvement in rate characteristics.

The present disclosure provides a positive electrode active material, a battery, and a method for producing a positive electrode active material.

Hereinbelow, the technical configurations and functions and effects of the present disclosure will be described. It should be noted that the action mechanisms of the present disclosure include presumptions. The action mechanisms do not limit the technical scope of the present disclosure.

[1] An aspect of the present disclosure provides a positive electrode active material.

The positive electrode active material includes a plurality of secondary particles. Each of the secondary particles includes a plurality of primary particles. Each of the primary particles contains an olivine-type phosphate compound. Carbon is attached to at least part of a surface of the primary particle. A cross-sectional surface of the secondary particle includes a first region and a second region. The first region includes a center of the secondary particle. The second region includes a surface of the secondary particle. A minimum circumscribed circle of the cross-sectional surface of the secondary particle has a radius of D. The first region is a circle including a center of the minimum circumscribed circle and having a radius of 0.5D. A relationship of $1.1 \leq V_1/V_2$ is satisfied. The Vi is a pore volume $(cm^3/g)$ in the first region. The $V_2$ is a pore volume $(cm^3/g)$ in the second region.

It is considered that when each of the first region including the center of the secondary particle and the second region including the surface of the secondary particle has pores (voids), the area of contact with an electrolytic solution increases and, as a result, ion conductivity is enhanced. Particularly, when the ratio of the pore volume in the first region $(V_1)$ to the pore volume in the second region $(V_2)$ $(V_1/V_2)$ is 1.1 or more, rate characteristics are expected to improve.

[2] In the positive electrode active material according to the above [1], a relationship of $V_1/V_2 \leq 2.0$ may be satisfied. When a relationship of "$V_1/V_2 \leq 2.0$" is satisfied, rate characteristics are expected to improve.

[3] In the positive electrode active material according to the above [1] or [2], the secondary particles may have a volume-based D50 of 5 $\mu$m or more and 40 $\mu$m or less.

[4] In the positive electrode active material according to any one of the above [1] to [3], a relationship of $0.17 \, cm^3/g \leq V_1 \leq 0.20 \, cm^3/g$ may be satisfied.

When a relationship of "$0.17 \, cm^3/g \leq V_1 \leq 0.20 \, cm^3/g$" is satisfied, rate characteristics are further expected to improve.

[5] In the positive electrode active material according to any one of the above [1] to [4], the cross-sectional surface of the secondary particle may include the first region and the second region.

[6] In the positive electrode active material according to any one of the above [1] to [5], the olivine-type phosphate compound may be lithium manganese iron phosphate.

[7] Another aspect of the present disclosure provides a battery. The battery includes the positive electrode active material according to any one of the above [1] to [6].

[8] The battery according to the above [7] may have a bipolar structure.

[9] Another aspect of the present disclosure provides a method for producing a positive electrode active material. The method for producing a positive electrode active material includes: (a) mixing a manganese compound, a lithium compound, a phosphoric acid compound, a carbon source, an organic acid, and a solvent to form a first slurry; (b) drying the first slurry to form first precursor particles; (c) subjecting the first precursor particles to first heat treatment to form second precursor particles; (d) mixing the manganese compound, the lithium compound, the phosphoric acid compound, the carbon source, the second precursor particles, and the solvent to form a second slurry; (e) drying the second slurry to form third precursor particles; and (f) subjecting the third precursor particles to second heat treatment to produce an olivine-type phosphate compound. Carbon is attached to at least part of a surface of the olivine-type phosphate compound. The carbon source contains at least one selected from the group including sugar and an organic acid.

By performing the production steps of the method according to the above [9], the positive electrode active material according to the above [1] is expected to be produced.

[10] In the method for producing a positive electrode active material according to the above [9], the sugar may be added at a mass fraction of 0.5% to 1.5% and the organic acid may be added at a mass fraction of 0% to 1.0% in the step (a), and the sugar may be added at a mass fraction of 1.0% to 10% and the organic acid may be added at a mass fraction of 1.0% to 15% in the step (d).

Hereinbelow, an embodiment of the present disclosure (which hereinafter may be abbreviated as "present embodiment") and an example of the present disclosure (which hereinafter may be abbreviated as "present example") will be described. It should be noted that the present embodiment and the present example do not limit the technical scope of the present disclosure. The present embodiment and the present example are illustrative in all aspects. The present embodiment and the present example are non-restrictive. The technical scope of the present disclosure includes all modifications within the meaning and the scope that are equivalent to the claims. For example, it is originally expected that certain configurations of the present embodiment may freely be combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram of a secondary particle according to a present embodiment;
FIG. 2 is a conceptual diagram of a positive electrode active material according to the present embodiment;
FIG. 3 is a schematic flowchart of a method for producing a positive electrode active material according to the present embodiment;
FIG. 4 is a schematic perspective view of a battery according to a present embodiment;
FIG. 5 is a schematic cross-sectional view taken along the line V-V in FIG.4; and
FIG. 6 is a table showing experimental results of No. 1 to No. 7 in an example.

DETAILED DESCRIPTION OF EMBODIMENTS

Terms and Phrases

The terms "comprise", "contain", "have" and variations thereof are open-ended terms. When a configuration is described using such an open-ended term, an optional element may or may not be further included in addition to an essential element. The term "consist of" is a closed term. However, even when a configuration is described using such a closed term, impurities present under normal conditions and an additional element irrelevant to the target technique may be included. The term "essentially consist of" is a semi-closed term. When a configuration is described using such a semi-closed term, addition of an element that does not substantially affect the basic and novel characteristics of the target technique is allowed.

Terms such as "may" and "can" are used not in a mandatory sense, meaning "must" but in a permissive sense, meaning "it is possible".

Unless otherwise specified, the order of execution of multiple steps, actions, operations, and the like included in any of various methods is not limited to the described order. For example, multiple steps may proceed simultaneously. For example, multiple steps may be executed one after another.

Terms such as "first" and "second" are used only to distinguish a plurality of elements from each other. The terms are not intended to limit the elements to which these terms are added. The terms are not linked to, for example, the order or importance of the elements.

For example, the phrase "at least one of A and B" includes "A or B" and "A and B". "At least one of A and B" may also be written as "A and/or B".

A geometric term should not be interpreted in a strict sense. Examples of the geometric term include "parallel", "vertical", and "orthogonal". For example, direction, angle, or distance, may relatively be displaced to the extent that substantially the same or similar function can be obtained. The geometric term may include, for example, tolerances or errors in terms of design, operation, and production. A dimensional relationship in each of the drawings may not coincide with an actual dimensional relationship. The dimensional relationship in each of the drawings may have been changed to lead readers to understand. For example, length, width, and thickness may have been changed. Part of the configuration may have been omitted.

Unless otherwise specified, an element described in a "singular form" may be plural. For example, a particle may refer to a plurality of particles, assemblies of particles, or powder particles.

Unless otherwise specified, a numerical range such as "m% to n%" includes an upper limit and a lower limit. That is, "m% to n%" indicates a numerical range of "equal to or more than m% and equal to or less than n%". Further, "equal to or more than m% and equal to or less than n%" includes "more than m% and less than n%". "Equal to or more than" and "equal to or less than" are expressed by inequality signs having an equal sign "$\leq$" and "$\geq$", respectively. "More than" and "less than" are expressed by inequality signs not having an equal sign "<" and ">", respectively. Any numerical value selected from the numerical range may be set as a new upper or lower limit. For example, a new numerical range may be set by freely combining a numerical value in the numerical range and a numerical value described in a different part herein or shown in tables or the drawings.

All the numerical values are interpreted as being modified by the term "about". The term "about" may mean, for example, $\pm 5\%$, $\pm 3\%$, or $\pm 1\%$. All the numerical values may be approximate values that may vary depending on how the target technique is used. All the numerical values may be expressed in significant figures. Unless otherwise specified, a measured value may be an average of two or more measurements. The number of measurements may be 3 or more, 5 or more, or 10 or more. It is generally expected that the larger the number of measurements, the higher the reliability of the average. A measured value may be rounded off based on the number of significant figures. A measured value may include, for example, an error due to the detection limit of a measurement device.

Devices, software, etc. used for measurement of various values are merely examples. Products similar to the devices etc. exemplified herein may be used. When a similar product is used, measurement conditions may be adjusted depending on a device to be used.

$V_1$, $V_2$, and the pore volume of a secondary particle ($V_3$) can be measured by the Barret-Joyner-Halenda (BJH) multipoint method. Measurement procedures are as follows. It should be noted that, as will be described later, a positive electrode active material (secondary particles) of the present invention is produced through two granulation steps.

Second precursor particles are prepared. The second precursor particles are vacuum-dried at 120°C for 5 hours. The amount of nitrogen adsorbed at the boiling point (-195.8°C) of liquid nitrogen is measured with the use of a nitrogen adsorption measuring device (Autosorb (manufactured by Quantachrome)) to form a nitrogen adsorption isotherm. Based on the formed nitrogen adsorption isotherm, a pore distribution curve is determined by the BJH multipoint method to calculate the pore volume of the second precursor particle. The pore volume of the second precursor particle corresponds to $V_1$.

A positive electrode active material is prepared. The positive electrode active material is vacuum-dried at 120°C for 5 hours. The pore volume is calculated by the same method as used for the second precursor particle. The pore volume of the positive electrode active material corresponds to $V_3$. $V_2$ is calculated based on $V_1$ and $V_3$.

The "maximum Feret diameter" refers to the length of long side of bounding rectangle (rectangle or square) of a particle. When the bounding rectangle is a square, the length of its long side refers to the length of its each side.

"D50" refers to a particle diameter corresponding to 50% of a cumulative amount in a volume-based particle size distribution (cumulative size distribution). The D50 is measured by a laser diffraction particle size distribution measurement device.

The chemical composition of a compound may be measured by Inductively coupled plasma atomic emission spectroscopy (ICP-AES). A sample solution is prepared by dissolving 0.1 g of a sample (e.g., a positive electrode active material) in a mixed acid (10 mL) of hydrochloric acid and sulfuric acid. The sample solution is diluted to an appropriate concentration in a measuring flask. After dilution, chemical composition analysis is performed by an ICP-AES device. For example, a product of "PS3520 UVDDII (manufactured by Hitachi High-Tech Science Corporation)" may be used.

A stoichiometric composition formula represents a typical example of a compound. A compound may have a non-stoichiometric composition. For example, "$Al_2O_3$" is not limited to a compound having an amount-of-substance ratio (mole ratio) of "Al/O = 2/3". Unless otherwise specified, "$Al_2O_3$" represents a compound containing Al and O in any amount-of-substance ratio. For example, the compound may be doped with a trace element. Some of Al and O may be replaced with another element.

A "derivative" refers to a compound obtained by modifying part of its original compound by at least one selected from the group including functional group introduction, atomic substitution, oxidation, reduction, and another chemical reaction. The number of modification sites may be one or more. A "substituent" may include, for example, at least one selected from the group including an alkyl group, an alkenyl group, an alkynyl group, a cycloalkyl group, an unsaturated cycloalkyl group, an aromatic group, a heterocyclic group, a halogen atom (e.g., F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthiol group, a sulfonyl group, a sulfinyl group, a ureido group, an amide phosphate group, a sulfo group, a carboxyl group, a hydroxamic group, a sulfino group, a hydrazino group, an imino group, and a silyl group. These substituents may further be substituted. When there are two or more substituents, these substituents may be the same or different from each other. A plurality of substituents may be bonded to each other to form a ring.

Positive Electrode Active Material

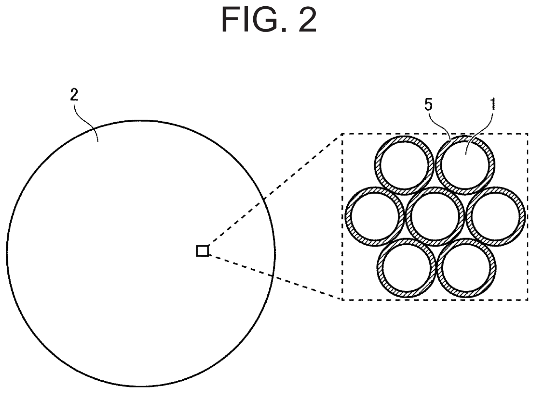

FIG. 2 is a conceptual diagram of a positive electrode active material according to the present embodiment. The positive electrode active material includes a secondary particle 2. The positive electrode active material may be an assembly of the secondary particles 2. That is, the positive electrode active material may be a powder. The D50 of the powder may be, for example, 5 $\mu$m or more, 10 $\mu$m or more, 15 $\mu$m or more, or 20 $\mu$m or more. The D50 may be, for example, 50 $\mu$m or less, 45 $\mu$m or less, 40 $\mu$m or less, 35 $\mu$m or less, 30 $\mu$m or less, or 25 $\mu$m or less.

The secondary particle 2 may have any shape. The secondary particle 2 may be, for example, spherical, rod-like, or angular. When the secondary particle 2 is spherical, for example, fillability is expected to improve. The sphericity of the secondary particle 2 may be, for example, 0.85 or more, 0.90 or more, or 0.95 or more. The sphericity of the secondary particle 2 may be, for example, 1 or less, 0.95 or less, or 0.90 or less. The "sphericity" refers to the degree of circularity in an SEM image (a two-dimensional image). The sphericity (degree of circularity) is determined by the following formula.

$$\psi = 4\pi S/L^2$$

$\psi$: Sphericity (Degree of circularity)
$\pi$: Circle ratio
S: Sectional area of secondary particle 2 (Area of region surrounded by outline of secondary particle 2)
L: Perimeter of secondary particle 2 (Length of outline of secondary particle 2)

The sphericity is an arithmetic average of 30 secondary particles 2.

The D50 of the secondary particle 2 may be, for example, 5 $\mu$m or more, 10 $\mu$m or more, 15 $\mu$m or more, or 20 $\mu$m or more. The D50 of the secondary particle 2 may be, for example, 50 $\mu$m or less, 45 $\mu$m or less, 40 $\mu$m or less, 35 $\mu$m or less, 30 $\mu$m or less, or 25 $\mu$m or less. The D50 of the secondary particle 2 may be, for example, 5 $\mu$m or more and 40 $\mu$m or less.

The secondary particle 2 includes a plurality of primary particles 1. The primary particle 1 may have any shape. The primary particle 1 may be, for example, spherical, rod-like, or angular. The primary particle 1 may be a nanoparticle. The maximum Feret diameter of the primary particle 1 may be, for example, 10 nm to 90 nm. The maximum Feret diameter of the primary particle 1 may be, for example, 20 nm or more, 30 nm or more, 40 nm or more, 50 nm or more, 60 nm or more, 70 nm or more, or 80 nm or more. The maximum Feret diameter of the primary particle 1 may be, for example, 80 nm or less or 60 nm or less. The maximum Feret diameter of the primary particle 1 is an arithmetic average of 30 primary particles.

Carbon is attached to at least part of the surface of the primary particle 1. The carbon may form a carbon layer 5. The amount of carbon attached may be, for example, 0.1% or more, 0.5% or more, 1% or more, 2% or more, 3% or more, or 4% or more in terms of mass fraction relative to the secondary particle 2. The amount of carbon attached may be, for example, 5% or less, 4% or less, or 3% or less in terms of mass fraction relative to the secondary particle 2.

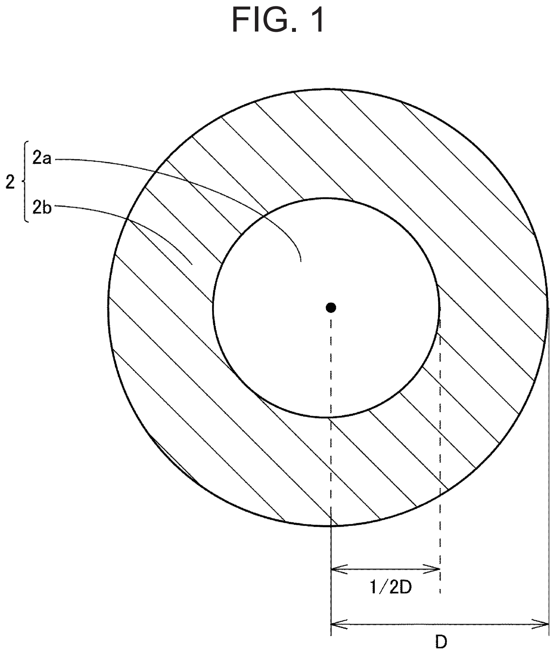

FIG. 1 is a conceptual diagram of the secondary particle according to the present embodiment. The cross-sectional surface of the secondary particle 2 includes a first region 2a and a second region 2b. The first region 2a includes the center of the secondary particle 2. The second region 2b includes the surface of the secondary particle 2. The minimum circumscribed circle of the cross-sectional surface of the secondary particle 2 has a radius of D. That is, the diameter of the minimum circumscribed circle is 2D. The first region 2a is a circle including the center of the minimum circumscribed circle and having a radius of 0.5D. That is, the diameter of the first region 2a is D. The cross-sectional surface of the secondary particle 2 may include another region. The secondary particle 2 may include, for example, a third region (not shown) surrounded by the first region 2a and the second region 2b. It should be noted that the "minimum circumscribed circle" refers to the smallest circle circumscribed around the secondary particle 2.

The cross-sectional surface of the secondary particle 2 may consist of the first region 2a and the second region 2b. In the cross-sectional surface of the secondary particle 2, the rest except the first region 2a corresponds to the second region 2b. The second region 2b surrounds the first region 2a located at the center.

In the present embodiment, a relationship of "$1.1 \leq V_1/V_2$" is satisfied. The $V_1$ (cm$^3$/g) refers to the pore volume in the first region 2a. The $V_2$ (cm$^3$/g) refers to the pore volume in the second region 2b. The $V_1/V_2$ may be, for example, 1.14 or more, 1.2 or more, 1.3 or more, 1.33 or more, 1.4 or more, or 1.5 or more. The $V_1/V_2$ may be, for example, 2.0 or less, 1.9 or less, 1.8 or less, 1.7 or less, 1.6 or less, or 1.5 or less. A relationship of "$1.1 \leq V_1/V_2 \leq 2.0$" may be satisfied. A relationship of "$1.2 \leq V_1/V_2 \leq 2.0$" may be satisfied.

The pore volume in the first region 2a "$V_1$" may be, for example, 0.1 $cm^3/g$ or more, 0.12 $cm^3/g$ or more, 0.15 $cm^3/g$ or more, 0.16 $cm^3/g$ or more, or 0.17 $cm^3/g$ or more. The pore volume in the first region 2a "$V_1$" may be, for example, 0.25 $cm^3/g$ or less, 0.22 $cm^3/g$ or less, 0.2 $cm^3/g$ or less, 0.19 $cm^3/g$ or less, or 0.18 $cm^3/g$ or less. A relationship of "0.17 $cm^3/g \leq V_1 \leq 0.20 \ cm^3/g$" may be satisfied.

The pore volume in the second region 2b "$V_2$" may be, for example, 0.1 $cm^3/g$ or more, 0.12 $cm^3/g$ or more, 0.14 $cm^3/g$ or more, or 0.15 $cm^3/g$ or more. The pore volume in the second region 2b "$V_2$" may be, for example, 0.2 $cm^3/g$ or less, 0.18 $cm^3/g$ or less, 0.16 $cm^3/g$ or less, or 0.15 $cm^3/g$ or less.

The pore volume of the secondary particle 2 "$V_3$" may be, for example, 0.1 $cm^3/g$ or more, 0.11 $cm^3/g$ or more, 0.12 $cm^3/g$ or more, 0.13 $cm^3/g$ or more, 0.14 $cm^3/g$ or more, or 0.15 $cm^3/g$ or more. The pore volume of the secondary particle 2 "$V_3$" may be, for example, 0.2 $cm^3/g$ or less, 0.19 $cm^3/g$ or less, 0.18 $cm^3/g$ or less, 0.17 $cm^3/g$ or less, 0.16 $cm^3/g$ or less, or 0.15 $cm^3/g$ or less.

Each of the primary particles 1 contains an olivine-type phosphate compound. The "olivine-type" refers to a crystal structure belonging to a space group Pnma. A space group is identified by powder X-ray diffraction (XRD). The primary particle 1 may be, for example, a single-phase compound. The primary particle 1 may further include a phase belonging to another space group as long as it includes an olivine-type crystal phase. For example, the primary particle 1 may further include an amorphous phase.

The olivine-type phosphate compound may contain, for example, lithium iron phosphate (LFP), lithium manganese phosphate (LMP), or the like. In LMP, part of manganese (Mn) may be substituted with iron (Fe). Fe-substituted LMP is also referred to as lithium manganese iron phosphate (LMFP). The primary particle 1 may have a composition represented by, for example, the following general formula.

$$Li_{1-a}Mn_{1-x}Fe_xPO_4$$

For example, a relationship of "$-0.5 \leq a \leq 0.5$" may be satisfied. x may be, for example, 0 or more, 0.05 or more, 0.1 or more, 0.2 or more, 0.3 or more, 0.4 or more, 0.5 or more, 0.6 or more, 0.7 or more, 0.8 or more, or 0.9 or more. x may be, for example, 1 or less, 0.9 or less, 0.8 or less, 0.7 or less, 0.6 or less, 0.5 or less, 0.4 or less, 0.3 or less, 0.2 or less, or 0.1 or less.

LMP and LMFP may be doped with an element (dopant) other than lithium (Li), Mn, Fe, phosphorus (P) and oxygen (O). The amount of the dopant added (amount fraction relative to amount-of-substance of Li) may be, for example, 0.01 to 0.1. The dopant may contain, for example, at least one selected from the group including boron (B), nitrogen (N), halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium(Tm), ytterbium (Yb), lutetium (Lu), and actinide.

The positive electrode active material may further contain another component as long as it contains at least one of LFP, LMP, and LMFP. The another component may contain, for example, a lithium-nickel composite oxide (LNO), a lithium-cobalt composite oxide (LCO), or a lithium-manganese composite oxide (LMO). The mixing ratio (mass ratio) between LMFP and the another component may be, for example, "LMFP/another component = 9/1 to 1/9", "LMFP/another component = 8/2 to 2/8", "LMFP/another component = 7/3 to 3/7", or "LMFP/another component = 6/4 to 4/6". The positive electrode active material may be, for example, a mixture of a powder of LMFP and a powder of another component.

The LNO may have a crystal structure belonging to, for example, a space group R-3m. The LNO may have a composition represented by, for example, the following general formula.

$$Li_{1-a}Ni_xM_{1-x}O_2$$

In the formula, relationships of $-0.5 \leq a \leq 0.5$ and $0 \leq x \leq 1$ are satisfied. M may contain, for example, at least one selected from the group including Co, Mn, and Al. A relationship of, for example, $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied. A relationship of, for example, $-0.4 \leq a \leq 0.4$, $-0.3 \leq a \leq 0.3$, $-0.2 \leq a \leq 0.2$, or $-0.1 \leq a \leq 0.1$ may be satisfied.

The LNO may contain, for example, at least one selected from the group including $LiNi_{0.9}Co_{0.1}O_2$, $LiNi_{0.9}Mn_{0.1}O_2$, and $LiNiO_2$.

The LNO may be represented by, for example, the following general formula. A compound represented by the following general formula may also be referred to as "NCM".

$$Li_{1-a}Ni_xCo_yMn_zO_2$$

In the formula, relationships of $-0.5 \leq a \leq 0.5$, $0 < x < 1$, $0 < y < 1$, $0 < z < 1$, $x + y + z = 1$ are satisfied. A relationship of, for example, $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. A relationship of, for example, $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. A relationship of, for example, $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

The NCM may contain, for example, at least one selected from the group including $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

The LNO may be represented by, for example, the following general formula. A compound represented by the following general formula is also referred to as "NCA".

$$Li_{1-a}Ni_xCo_yAl_zO_2$$

In the formula, relationships of $-0.5 \leq a \leq 0.5$, $0 < x < 1$, $0 < y < 1$, $0 < z < 1$, $x + y + z = 1$ are satisfied. A relationship of, for example, $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. A relationship of, for example, $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. A relationship of, for example, $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

The NCA may contain, for example, at least one selected from the group including $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

Method for Producing Positive Electrode Active Material

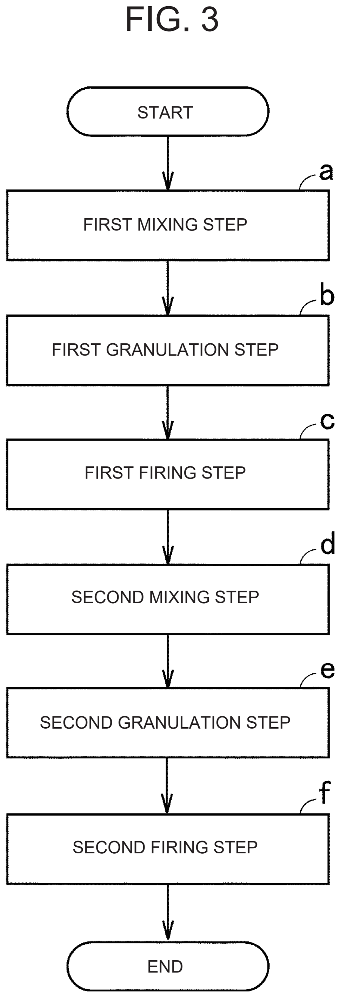

FIG. 3 is a schematic flowchart of a method for producing a positive electrode active material according to the present embodiment. Hereinbelow, the "method for producing a positive electrode active material according to the present embodiment" may be abbreviated as the "present method". The present method may include, for example, "(a) First Mixing Step", "(b) First Granulation Step", "(c) First Firing Step", "(d) Second Mixing Step", "(e) Second Granulation Step", and "(f) Second Firing Step".

(a) First Mixing Step

This step is a step in which a manganese compound, a lithium compound, a phosphoric acid compound, a carbon source, and a solvent are mixed to form a first slurry. Hereinbelow, a description will be made with reference to a case where LMFP is produced as a positive electrode active material. However, the positive electrode active material according to the present disclosure is not limited to LMFP.

The manganese compound, the lithium compound, the phosphoric acid compound, and an iron compound may be weighed in such a manner that a compositional ratio (amount-of-substance ratio) shown in a composition formula of, for example, "$Li_{1-a}Mn_{1-x}Fe_xPO_4$ ($-0.5 \leq a \leq 0.5$, $0 \leq x < 1$)" is achieved. The manganese compound may contain, for example, manganese carbonate. The lithium compound may contain, for example, lithium hydroxide. The phosphoric acid compound may contain, for example, lithium dihydrogen phosphate. The iron compound may contain, for example, ferric phosphate.

The carbon source is a raw material of carbon to be attached to the surface of a primary particle. The carbon source contains at least one selected from the group including sugar and an organic acid. The sugar may contain, for example, glucose, sucrose, fructose, or the like. The organic acid may contain, for example, citric acid, lactic acid, or the like. The carbon source may contain sugar and an organic acid. The sugar may be glucose. The organic acid may be citric acid. The organic acid is more likely to penetrate into the central portion of a secondary particle as compared to the sugar, and therefore $V_1$ can be adjusted by adjusting the amount of the organic acid to be added. The amount of the carbon source to be added is, for example, 0.5% to 2.5% in terms of mass fraction relative to a raw material mixture. The amount of the sugar to be added is, for example, 0.5% to 1.5% in terms of mass fraction relative to a raw material mixture. The amount of the organic acid to be added is, for example, 0% to 1.0% in terms of mass fraction relative to a raw material mixture.

The solvent may contain, for example, water. The solid content concentration of the first slurry may be, for example, 20% to 40% in terms of mass fraction.

The particle size of particles in the first slurry may be adjusted by performing wet grinding. For example, wet grinding may be performed in such a manner that a D50 of 0.10 μm to 1 μm is achieved.

(b) First Granulation Step

This step is a step in which the first slurry is dried to form first precursor particles.

The first precursor particles may be formed by, for example, spray drying. The temperature of an air inlet may be, for example, 230°C to 270°C. The temperature of an air outlet may be, for example, 100°C to 130°C. An intake pressure may be, for example, 1.8 MPa to 2.2 MPa. The nozzle pressure of a spray nozzle may be, for example, 0.1 MPa to 0.3 MPa.

(c) First Firing Step

This step is a step in which the first precursor particles are subjected to first heat treatment to form second precursor particles.

Any heat treatment furnace (e.g., an electric furnace or a muffle furnace) may be used. An atmosphere in which this step is performed may be, for example, an inert atmosphere. The inert atmosphere may be, for example, a nitrogen atmosphere. The temperature of the first heat treatment may be, for example, 400°C or higher and lower than 600°C. The time of the first heat treatment may be, for example, 4 hours to 6 hours. In the process of a temperature increase during firing, the temperature increase may be stopped once at about 200°C to maintain a temperature of 200°C for about 1 hour instead of a continuous temperature increase.

(d) Second Mixing Step

This step is a step in which a manganese compound, a lithium compound, a phosphoric acid compound, a carbon source, a second precursor particle and a solvent are mixed to form a second slurry.

The manganese compound, the lithium compound, the phosphoric acid compound, and the solvent may be the same as those used in the first mixing step. The solid content concentration of the second slurry may be, for example, 5% to 50% in terms of mass fraction.

The carbon source contains at least one selected from the group including sugar and an organic acid. The carbon source may be the same as that used in the first mixing step. In this step, $V_2$ can be adjusted by adjusting the amount of the organic acid to be added. The amount of the carbon source to be added is, for example, 2.0% to 25% in terms of mass fraction relative to a raw material mixture. The amount of the sugar to be added is, for example, 1.0% to 10% in terms of mass fraction relative to a raw material mixture. The amount of the organic acid to be added is, for example, 1.0% to 15% in terms of mass fraction relative to a raw material mixture.

The particle size of particles in the second slurry may be adjusted by performing wet grinding. For example, wet grinding may be performed by a bead mill. A bead diameter may be, for example, 0.015 mm to 3 mm. A grinding time may be, for example, 10 minutes to 30 minutes. The circumferential velocity of the mill may be, for example, 8 m/s to 14 m/s.

(e) Second Granulation Step

This step is a step in which the second slurry is dried to form third precursor particles.

The third precursor particles may be formed by, for example, spray drying. The temperature of an air inlet may be, for example, 230°C to 270°C. The temperature of an air outlet may be, for example, 100°C to 130°C. An intake pressure may be, for example, 1.8 MPa to 2.2 MPa. The nozzle pressure of a spray nozzle may be, for example, 0.1 MPa to 0.3 MPa.

(f) Second Firing Step

This step is a step in which the third precursor particles are subjected to second heat treatment to produce an olivine-type phosphate compound.

Any heat treatment furnace (e.g., an electric furnace or a muffle furnace) may be used. An atmosphere in which this step is performed may be, for example, an inert atmosphere. The inert atmosphere may be, for example, a nitrogen atmosphere. The temperature of the second heat treatment may be, for example, 600°C or higher and 750°C or lower. The time of the second heat treatment may be, for example, 4 hours to 6 hours. In the process of a temperature increase during firing, the temperature increase may be stopped once at about 200°C to maintain a temperature of 200°C for about 1 hour instead of a continuous temperature increase.

Battery

In some present embodiments, the battery has a monopolar structure. In some present embodiments, the battery has a bipolar structure. As an example, a battery having a bipolar structure (bipolar battery) will be described.

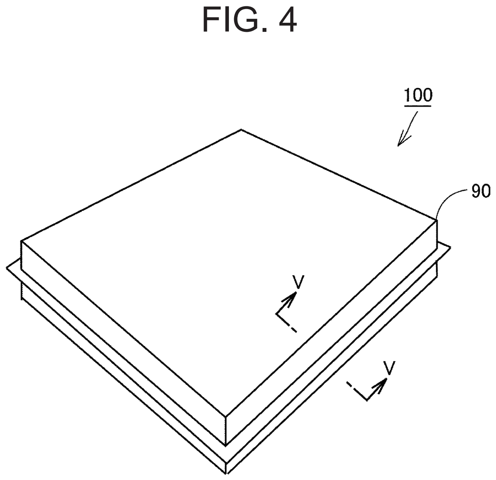

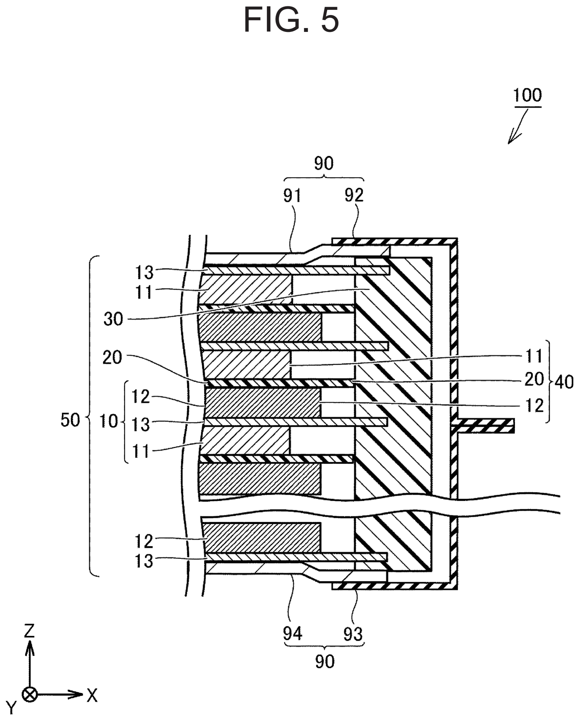

FIG. 4 is a schematic perspective view of a battery according to the present embodiment. FIG. 5 is a schematic sectional view taken along the line V-V shown in FIG. 4. Hereinafter, a "perpendicular direction" refers to a normal direction relative to the surface of a sheet-shaped member (e.g., a foil or an electrode). An "in-plane direction" refers to any direction orthogonal to the perpendicular direction. In FIG. 5, a Z-axis direction corresponds to the perpendicular direction. An X-axis direction and a Y-axis direction are examples of the in-plane direction.

A battery 100 includes an exterior body 90 and a power-generating element 50. The exterior body 90 houses the power-generating element 50. The exterior body 90 may include, for example, a first current collector plate 91, a first laminate film 92, a second laminate film 93, and a second current collector plate 94. The first laminate film 92 and the second laminate film 93 are joined together around their ends in the in-plane direction. At the joint between the first laminate film 92 and the second laminate film 93, a sealing material (not shown) may be interposed between the first laminate film 92 and the second laminate film 93.

The first current collector plate 91 and the second current collector plate 94 are joined to the power-generating element 50 at their ends in a lamination direction (Z-axis direction). The first laminate film 92 is joined to the first current collector plate 91. The second laminate film 93 is joined to the second current collector plate 94. At the joint between the current collector plate and the laminate film, a sealing material (not shown) may be interposed between the current collector plate and the laminate film.

The power-generating element 50 includes a plurality of bipolar electrodes 10. The bipolar electrodes 10 are laminated in the perpendicular direction (Z-axis direction). Each of the bipolar electrodes 10 includes a positive electrode layer 11, a current collector foil 13, and a negative electrode layer 12 in this order in the perpendicular direction. In the in-plane direction, (e.g., in the X-axis direction), the current collector foil 13 extends outward beyond the positive electrode layer 11 and the negative electrode layer 12. For example, the current collector foil 13 may extend outward beyond the positive electrode layer 11 and the negative electrode layer 12 around its entire periphery in the in-plane direction.

The current collector foil 13 is conductive. The current collector foil 13 may include, for example, a metallic foil or an electrically-conductive resin layer. For example, the current collector foil 13 may be formed by bonding together an Al foil and a Cu foil. A carbon material may be applied onto the surface of the current collector foil 13. The carbon material may contain, for example, carbon black.

The power-generating element 50 includes a sealing material 30. The sealing material 30 is joined to the current collector foils 13 at its end in the in-plane direction. For example, the sealing material 30 may be thermally welded to the current collector foils 13. For example, the sealing material 30 may be disposed along the entire periphery in the in-plane direction. The sealing material 30 may contain, for example, a resin material. The sealing material 30 seals spaces between the current collector foils 13 adjacent to each other in the perpendicular direction. Cells 40 are formed by sealing the spaces between the current collector foils 13 with the sealing material 30. The cells 40 are minimum units of the power-generating element 50. The battery 100 includes the cells 40 and therefore may also be referred to as a "bipolar module". Each of the cells 40 is hermetically sealed. The cells 40 are isolated from each other. Each of the cells 40 includes the positive electrode layer 11, a separator 20, the negative electrode layer 12, and an electrolytic solution.

Positive Electrode Layer

The positive electrode layer 11 is attached to one side of the current collector foil 13. For example, the positive electrode layer 11 may have a groove. The positive electrode layer 11 may be formed, for example, in stripes. The positive electrode layer 11 contains a positive electrode active material. That is, the electrode includes a positive electrode active material. The details of the positive electrode active material are as described above.

The positive electrode layer 11 may further contain, for example, an electrically-conductive material and a binder in addition to the positive electrode active material. The amount of the electrically-conductive material to be added may be, for example, 0.1 to 10 parts by mass per 100 parts by mass of the positive electrode active material. The electrically-conductive material may contain any component. For example, the electrically-conductive material may contain at least one selected from the group including graphite, acetylene black (AB), ketjen black (registered trademark), vapor-grown carbon fibers (VGCFs), carbon nanotubes (CNTs), and graphene flakes (GFs).

The amount of the binder to be added may be, for example, 0.1 to 10 parts by mass per 100 parts by mass of the positive electrode active material. The binder may contain any component. The binder may contain, for example, at least one selected from the group including polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinyl pyrrolidone (PVP), polyoxyethylene alkyl ether, and derivatives thereof.

The positive electrode layer 11 may further contain, for example, an inorganic filler, an organic filler, a solid electrolyte, a surface modifier, a dispersant, a lubricant, a flame retardant, a protective agent, a flux, a coupling agent, or an adsorbent. The positive electrode layer 11 may contain, for example, polyoxyethylene allyl phenyl ether phosphate, zeolite, a silane coupling agent, $MoS_2$, or $WO_3$.

Negative Electrode Layer

The negative electrode layer 12 is attached to one side of the current collector foil 13. The negative electrode layer 12 is disposed on the back of the positive electrode layer 11. The negative electrode layer 12 may have a larger area than the positive electrode layer 11. The negative electrode layer 12 contains a negative electrode active material.

The negative electrode active material may be, for example, in a particulate or sheet form. The D50 of the negative electrode active material may be, for example, 1 $\mu$m or more, 5 $\mu$m or more, or 10 $\mu$m or more. The D50 of the negative electrode active material may be, for example, 30 $\mu$m or less, 20 $\mu$m or less, 15 $\mu$m or less, or 10 $\mu$m or less.

The negative electrode active material may contain any component. The negative electrode active material may contain, for example, at least one selected from the group including a carbon-based active material, an alloy-based active material, an Si-C composite material, Li metal, an Li-based alloy, and lithium titanate. In some present embodiments, the battery may be an Li metal negative electrode battery.

The carbon-based active material may contain, for example, at least one selected from the group including graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2", or "natural graphite/artificial graphite = 3/7 to 7/3".

The surface of the graphite may be covered with, for example, amorphous carbon. The surface of the graphite may be covered with, for example, another type of material. The another type of material may contain, for example, at least one selected from the group including P, W, Al, and O. The another type of material may contain, for example, at least one selected from the group including $Al(OH)_3$, $AlOOH$, $Al_2O_3$, $WO_3$, $Li_2CO_3$, $LiHCO_3$, and $Li_3PO_4$.

The alloy-based active material may contain, for example, at least one selected from the group including Si, Li silicate, SiO, an Si-based alloy, tin (Sn), SnO, and an Sn-based alloy.

The SiO may be represented by, for example, the following general formula.

$$SiO_x$$

In the formula, a relationship of 0 < x < 2 is satisfied. A relationship of, for example, $0.5 \leq x \leq 1.5$ or $0.8 \leq x \leq 1.2$ may be satisfied.

The "Si-C composite material" refers to a composite material of a carbon-based active material (e.g., graphite) and an alloy-based active material (e.g., Si). For example, Si microparticles may be dispersed in carbon particles. For example, Si microparticles may be dispersed in graphite particles. For example, Li silicate particles may be coated with a carbon material (e.g., amorphous carbon).

Separator

The separator 20 can separate the positive electrode layer 11 from the negative electrode layer 12. The separator 20 is electrically insulative. The separator 20 may include, for example, at least one selected from the group including a resin film (polymer film), an inorganic particle layer, and an organic particle layer. The separator 20 may include, for example, a resin film and an inorganic particle layer.

The resin film is porous. The resin film may include, for example, a microporous film or a non-woven fabric. The resin film has a resin skeleton. The resin skeleton may be, for example, continuous in a net-like way. Gaps in the resin skeleton form pores. The resin film allows an electrolytic solution to pass through it. The resin film may have an average pore diameter of, for example, 1 $\mu$m or less. The average pore diameter of the resin film may be, for example, 0.01 $\mu$m to 1 $\mu$m or 0.1 $\mu$m to 0.5 $\mu$m. The "average pore diameter" can be measured by mercury intrusion porosimetry. The resin film may have a Gurley value of, for example, 50 s/100 cm$^3$ to 250 s/100 cm$^3$. The Gurley value can be measured by a Gurley test method.

The resin film may contain, for example, at least one selected from the group including an olefin-based resin, a polyurethane-based resin, a polyamide-based resin, a cellulose-based resin, a polyether-based resin, an acrylic resin, and a polyester-based resin. The resin film may contain, for example, at least one selected from the group including polyethylene (PE), polypropylene (PP), polyamide (PA), polyamide imide (PAI), polyimide (PI), aromatic polyamide (aramid), polyphenylene ether (PPE), and derivatives thereof. The resin film can be formed by, for example, stretching or phase separation. The resin film may have a thickness of, for example, 5 $\mu$m to 50 $\mu$m or 10 $\mu$m to 25 $\mu$m.

The resin film may have, for example, a single-layer structure. The resin film may consist of, for example, a PE layer. The skeleton of the PE layer is formed of PE. The PE layer can have a shut-down function. The resin film may have, for example, a multilayer structure. The resin film may include, for example, a PP layer and a PE layer. The skeleton of the PP layer is formed of PP. The resin film may have, for example, a three-layer structure. The resin film may be formed by, for example, laminating a PP layer, a PE layer, and a PP layer in this order. The PE layer may have a thickness of, for example,

5 μm to 20 μm. The PP layer may have a thickness of, for example, 3 μm to 10 μm.

The inorganic particle layer may be formed on the surface of the resin film. The inorganic particle layer may be formed on only one side of the resin film or may be formed on both sides of the resin film. The inorganic particle layer may be formed on the side facing the positive electrode layer 11 or may be formed on the side facing the negative electrode layer 12. It should be noted that the inorganic particle layer may be formed on the surface of the positive electrode layer 11 or may be formed on the surface of the negative electrode layer 12.

The inorganic particle layer is porous. The inorganic particle layer contains inorganic particles. The inorganic particles may also be referred to as an "inorganic filler". Gaps between the inorganic particles form pores. The inorganic particle layer may have a thickness of, for example, 0.5 μm to 10 μm or 1 μm to 5 μm. The inorganic particles may contain, for example, a heat-resistant material. The inorganic particle layer containing a heat-resistance material is also referred to as "HRL (Heat Resistance Layer)". The inorganic particles may contain at least one selected from the group including boehmite, alumina, zirconia, titania, magnesia, and silica. The inorganic particles may have any shape. For example, the inorganic particles may be spherical, rod-like, plate-like, or fibrous. The inorganic particles may have a D50 of, for example, 0.1 μm to 10 μm or 0.5 μm to 3 μm. The inorganic particle layer may further contain a binder. The binder may contain, for example, at least one selected from the group including an acrylic resin, a polyamide-based resin, a fluorine-based resin, an aromatic polyether-based resin, and a liquid crystalline polyester-based resin.

The separator 20 may include, for example, an organic particle layer. The separator 20 may include, for example, an organic particle layer instead of the resin film. The separator 20 may include, for example, an organic particle layer instead of the inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The organic particle layer may have a thickness of, for example, 0.1 μm to 50 μm, 0.5 μm to 20 μm, 0.5 μm to 10 μm, or 1 μm to 5 μm. The organic particle layer contains organic particles. The organic particles may also be referred to as an "organic filler". The organic particles may contain a heat-resistant material. The organic particles may contain, for example, at least one selected from the group including PE, PP, PTFE, PI, PAI, PA, and aramid. The organic particles may be, for example, spherical, rod-like, plate-like, or fibrous. The organic particles may have a D50 of, for example, 0.1 μm to 10 μm or 0.5 μm to 3 μm.

The separator 20 may include, for example, a mixed layer. The mixed layer contains both inorganic particles and organic particles.

Electrolytic Solution

The electrolytic solution is a liquid electrolyte. The electrolytic solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. "mol/L" may also be written as "M". The solute contains a supporting salt (Li salt). The solute may contain, for example, an inorganic acid salt, an imide salt, an oxalato complex, or a halide. The solute may contain, for example, at least one selected from the group including $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives thereof.

The electrolytic solution may contain, for example, a carbonate-based solvent (carbonic ester-based solvent). The solvent may contain, for example, a cyclic carbonate, a chain carbonate, or a fluorinated carbonate. The solvent may contain, for example, at least one selected from the group including ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain a cyclic carbonate (e.g., EC, PC, or FEC) and a chain carbonate (e.g., EMC, DMC, or DEC). The mixing ratio (volume ratio) between the cyclic carbonate and the chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain a cyclic carbonate (e.g., EC or PC) and a fluorinated cyclic carbonate (e.g., FEC). The mixing ratio (volume ratio) between the cyclic carbonate and the fluorinated cyclic carbonate may be, for example, "cyclic carbonate/fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/fluorinated cyclic carbonate = 3/7 to 1/9".

The solvent may contain, for example, EC, FEC, EMC, DMC, and DEC. The volume ratios of the respective components may satisfy a relationship represented by, for example, the following formula.

$$V_{EC} + V_{FEC} + V_{EMC} + V_{DMC} + V_{DEC} = 10$$

In the above formula, $V_{EC}$, $V_{FEC}$, $V_{EMC}$, $V_{DMC}$, and $V_{DEC}$ respectively represent the volume ratios of EC, FEC, EMC, DMC, and DEC.

The following relationships are satisfied: $1 \leq V_{EC} \leq 4$, $0 \leq V_{FEC} \leq 3$, $V_{EC} + V_{FEC} \leq 4$, $0 \leq V_{EMC} \leq 9$, $0 \leq V_{DMC} \leq 9$, $0 \leq V_{DEC} \leq 9$, and $6 \leq V_{EMC} + V_{DMC} + V_{DEC} \leq 9$.

For example, a relationship of $1 \leq V_{EC} \leq 2$ or $2 \leq V_{EC} \leq 3$ may be satisfied.

For example, a relationship of $1 \leq V_{FEC} \leq 2$ or $2 \leq V_{FEC} \leq 4$ may be satisfied.

For example, a relationship of $3 \leq V_{EMC} \leq 4$ or $6 \leq V_{EMC} \leq 8$ may be satisfied.

For example, a relationship of $3 \leq V_{DMC} \leq 4$ or $6 \leq V_{DMC} \leq 8$ may be satisfied.

For example, a relationship of $3 \leq V_{DEC} \leq 4$ or $6 \leq V_{DEC} \leq 8$ may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4" in terms of volume ratio.

The electrolytic solution may contain an ether-based solvent. The electrolytic solution may contain, for example, at least one selected from the group including tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolytic solution may contain any additive. The amount of the additive to be added (the mass fraction of the additive relative to the total mass of the electrolytic solution) may be, for example, 0.01% to 5%, 0.05% to 3%, or 0.1% to 1%. The additive may contain, for example, an SEI (Solid Electrolyte Interphase) formation promoter, an SEI formation inhibitor, a gas-forming agent, an overcharging inhibitor, a flame retardant, an antioxidant, an electrode protective agent, or a surfactant.

The additive may contain, for example, at least one selected from the group including vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), propanesultone (PS), ethylene sulfate (DTD), $\gamma$-butyrolactone, a phosphazene compound, a carboxylic ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene], fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphoric ester (e.g., trimethyl phosphate or triethyl phosphate), a carboxylic anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The component described above as a solute or a solvent may be used as a trace component (additive). The additive may contain, for example, at least one selected from the group including $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolytic solution may contain an ionic liquid. The ionic liquid may contain, for example, at least one selected from the group including a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolytic solution and a polymer material. The polymer material may form a polymer matrix. The polymer material may contain, for example, at least one selected from the group including PVdF, PVdF-HFP, polyacrylonitrile (PAN), PVdF-PAN, polyethylene oxide (PEO), polyethylene glycol (PEG), and derivatives thereof.

Production of Positive Electrode Active Material

(No. 1)

(a) First Mixing Step

Lithium hydroxide monohydrate, manganese carbonate, ferric phosphate, and lithium dihydrogen phosphate were weighed in such a manner that a compositional ratio shown in a composition formula "$Li_{1.04}Mn_{0.6}Fe_{0.4}PO_4$" was achieved. Glucose was weighed in an amount of 8% in terms of mass fraction relative to the total mass of the raw materials.

The materials weighed and water were mixed to form a first slurry. The solid content concentration of the first slurry was 10% to 50% in terms of mass fraction. Wet grinding was performed in such a manner that a D50 of 0.30 μm was achieved.

(b) First Granulation Step

The first slurry was spray-dried to form first precursor particles. The temperature of an air inlet was 250°C, the temperature of air outlet of a spray drier was 115±15°C, an intake pressure was 2.0 MPa, and the nozzle pressure of a spray nozzle was 0.2±0.1 MPa. The target value of D50 of the first precursor particles was 9±5 μm.

(c) First Firing Step

The first precursor particles were fired in a nitrogen atmosphere to synthesize a positive electrode active material (LMFP). The conditions of this step are as follows. First, the temperature in a furnace was increased to 200°C at a temperature increase rate of 3°C/min. The temperature in the furnace was maintained at 200°C for 1 hour. Then, the temperature in the furnace was increased to 650°C at a temperature increase rate of 5°C/min. The temperature in the furnace was maintained at 650°C for 5 hours. Then, the temperature in the furnace was decreased to 400°C at a temperature decrease rate of 2°C/min. Further, the temperature in the furnace was decreased to room temperature at a temperature decrease rate of 15°C/min.

(No. 2 to No. 7)

(a) First Mixing Step

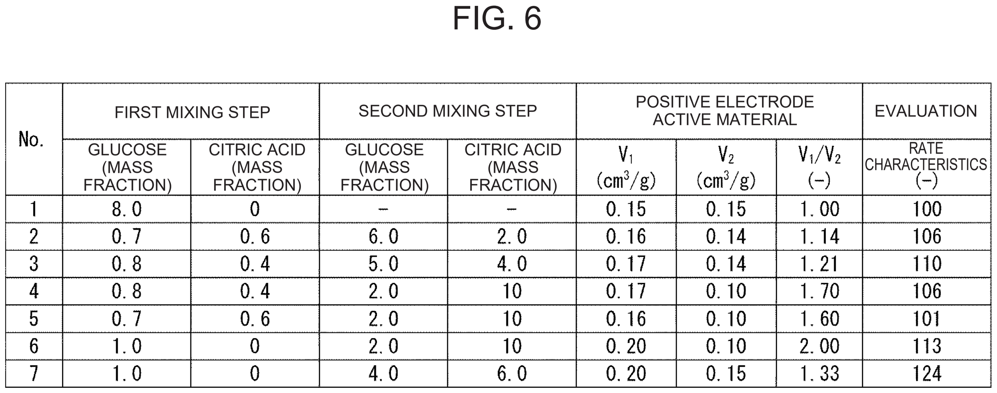

Lithium hydroxide monohydrate, manganese carbonate, ferric phosphate, and lithium dihydrogen phosphate were weighed in such a manner that a compositional ratio shown in a composition formula "$Li_{1.04}Mn_{0.6}Fe_{0.4}PO_4$" was achieved. Glucose and citric acid were weighed in an amount shown in FIG. 6 in terms of mass fraction relative to the total mass of the raw materials. The materials weighed and water were mixed to form a first slurry. The solid content concentration of the first slurry was 10% to 50% in terms of mass fraction. Wet grinding was performed in such a manner that a D50 of 0.30 μm was achieved.

(b) First Granulation Step

The first slurry was spray-dried to form first precursor particles. The temperature of an air inlet was 250°C, the temperature of air outlet of a spray drier was 115±15°C, an intake pressure was 2.0 MPa, and the nozzle pressure of a spray nozzle was 0.2±0.1 MPa. The target value of D50 of the first precursor particles was 6±1 μm.

(c) First Firing Step

The first precursor particles were fired in a nitrogen atmosphere to synthesize second precursor particles. The conditions of this step are as follows. First, the temperature in a furnace was increased to 200°C at a temperature increase rate of 3°C/min. The temperature in the furnace was maintained at 200°C for 1 hour. Then, the temperature in the furnace was increased to 580°C at a temperature increase rate of 5°C/min. The temperature in the furnace was maintained at 580°C for 5 hours. Then, the temperature in the furnace was decreased to 400°C at a temperature decrease rate of 2°C/min. Further, the temperature in the furnace was decreased to room temperature at a temperature decrease rate of 15°C/min.

(d) Second Mixing Step

Lithium hydroxide monohydrate, manganese carbonate, ferric phosphate, and lithium dihydrogen phosphate were weighed in such a manner that a compositional ratio shown in a composition formula "$Li_{1.04}Mn_{0.6}Fe_{0.4}PO_4$" was achieved. Glucose and citric acid were weighed in an amount shown in FIG. 6 in terms of mass fraction relative to the total mass of the raw materials. The materials weighed, second precursor particles and water were mixed to form a second slurry. The solid content concentration of the second slurry was 5% to 50% in terms of mass fraction. Wet grinding was performed by a bead mill. With regard to the bead mill, a bead diameter was 0.015 mm to 3 mm, a grinding time was 10 minutes to 30 minutes, and the circumferential velocity of the mill was 8 m/s to 14 m/s.

(e) Second Granulation Step

The second precursor particles were spray-dried to form third precursor particles. The temperature of an air inlet was 250°C, the temperature of air outlet of a spray drier was 115±15°C, an intake pressure was 2.0 MPa, and the nozzle pressure of a spray nozzle was 0.2±0.1 MPa.

(f) Second Firing Step

The third precursor particles were fired in a nitrogen atmosphere to synthesize a positive electrode active material (LMFP). The conditions of this step are as follows. First, the temperature in a furnace was increased to 200°C at a temperature increase rate of 3°C/min. The temperature in the furnace was maintained at 200°C for 1 hour. Then, the temperature in the furnace was increased to 650°C at a temperature increase rate of 5°C/min. The temperature in the furnace was maintained at 650°C for 5 hours. Then, the temperature in the furnace was decreased to 400°C at a temperature decrease rate of 2°C/min. Further, the temperature in the furnace was decreased to room temperature at a temperature decrease rate of 15°C/min.

Production of Coin Cell

A positive electrode active material, an electrically-conductive material (acetylene black), and a binder (PVdF) were mixed to form a mixture. The mixing ratio (mass ratio) among them was "positive electrode active material/electrically-conductive material/binder = 92/5/3". The mixture was dispersed in a solvent (N-methyl-2-pyrrolidone) to form a paste. The solid content concentration of the paste was 50% in terms of mass fraction. The paste was applied onto the surface of an Al foil and dried to form a positive electrode layer. The density of the positive electrode layer was adjusted to 1.8 g/cm$^3$ by roll press to form a positive electrode original plate. The positive electrode original plate was subjected to vacuum drying treatment at 120°C for 12 hours. After drying, a disc sample (diameter: 14 mm) was punched out from the positive electrode original plate.

A coin cell was assembled in a glove box. The configuration of the cell is as follows.

Working electrode: Disk sample (Positive electrode)
Counter electrode: Li foil
Separator: Polymer porous membrane
Electrolytic solution: "EC/DMC = 3/7 (Volume ratio)", $LiPF_6$ (1 mol/L)

Evaluation

Measurement

$V_1$ and $V_2$ were measured by the above-described method. The results are shown in FIG. 6.

Rate characteristics

A discharge capacity ratio (1 C/0.1 C) was measured by the following procedure. It is considered that the larger the discharge capacity ratio (1 C/0.1 C), the better rate characteristics.

A rate corresponding to 1C is determined based on a discharge capacity (theoretical capacity) determined from the mass of the positive electrode layer applied. "C" is a symbol indicating the rate (hour rate) of an electric current. At a rate of 1C, a theoretical capacity is discharged in 1 hour. At 25°C, a coin cell is charged by constant current-constant voltage (CCCV) charging under the following conditions.

Rate during CC charging: 0.1 C
Upper limit charging voltage: 4.3 VCV
Rate of cut current during charging: 0.01 C

After charging, CC discharging to 3.0 V is performed at a rate of 0.1 C at 25°C to measure a discharge capacity (0.1 C). The coin cell is again charged by the above CCCV charging. After charging, CC discharge to 3.0 V is performed at a rate of 1 C at 25°C to measure a discharge capacity (1 C). The discharge capacity (1 C) is divided by the discharge capacity (0.1 C) to determine a discharge capacity ratio (1 C/0.1 C). The results are shown in FIG. 6. It should be noted that the value of rate characteristics shown in FIG. 6 is a relative value determined when the discharge capacity ratio of No. 1 is taken as 100.

Results

As shown in FIG. 6, when the requirements of the present disclosure are satisfied, rate characteristics tend to improve.

**Claims**

1. A positive electrode active material comprising a plurality of secondary particles (2), wherein:

   each of the secondary particles (2) includes a plurality of primary particles (1);
   each of the primary particles (1) contains an olivine-type phosphate compound;
   carbon (5) is attached to at least part of a surface of the primary particle (1);
   a cross-sectional surface of the secondary particle (2) includes a first region (2a) and a second region (2b);
   the first region (2a) includes a center of the secondary particle (2);
   the second region (2b) includes a surface of the secondary particle (2);
   a minimum circumscribed circle of the cross-sectional surface of the secondary particle (2) has a radius of D;
   the first region (2a) is a circle containing a center of the minimum circumscribed circle and having a radius of 0.5D;
   a relationship of $1.1 \leq V_1/V_2$ is satisfied;
   the $V_1$ is a pore volume ($cm^3/g$) in the first region (2a); and
   the $V_2$ is a pore volume ($cm^3/g$) in the second region (2b).

2. The positive electrode active material according to claim 1, wherein a relationship of $V_1/V_2 \leq 2.0$ is satisfied.

3. The positive electrode active material according to claim 1, wherein the secondary particles (2) have a volume-based D50 of 5 $\mu$m or more and 40 $\mu$m or less.

4. The positive electrode active material according to claim 1, wherein a relationship of 0.17 $cm^3/g \leq V_1 \leq$ 0.20 $cm^3/g$ is satisfied.

5. The positive electrode active material according to claim 1, wherein the cross-sectional surface of the secondary particle (2) includes the first region (2a) and the second region (2b).

6. The positive electrode active material according to claim 1, wherein the olivine-type phosphate compound is lithium manganese iron phosphate.

7. A battery (100) comprising the positive electrode active material according to any one of claims 1 to 6.

8. The battery (100) according to claim 7, wherein the battery (100) has a bipolar structure.

9. A method for producing a positive electrode active material, the method comprising:

   (a) mixing a manganese compound, a lithium compound, a phosphoric acid compound, a carbon source, and a solvent to form a first slurry;
   (b) drying the first slurry to form first precursor particles;
   (c) subjecting the first precursor particles to first heat treatment to form secondary precursor particles;
   (d) mixing the manganese compound, the lithium compound, the phosphoric acid compound, the carbon source, the second precursor particles, and the solvent to form a second slurry;
   (e) drying the second slurry to form third precursor particles; and
   (f) subjecting the third precursor particles to second heat treatment to produce an olivine-type phosphate compound, wherein:

      carbon (5) is attached to at least part of a surface of the olivine-type phosphate compound; and
      the carbon source contains at least one selected from a group including sugar and an organic acid.

10. The method according to claim 9, wherein:
    in the step (a), the sugar is added at a mass fraction of 0.5% to 1.5% and the organic acid is added at a mass fraction of 0% to 1.0%; and

in the step (d), the sugar is added at a mass fraction of 1.0% to 10%, and the organic acid is added at a mass fraction of 1.0% to 15%.

# FIG. 1

# FIG. 2

# FIG. 3

START

a

FIRST MIXING STEP

b

FIRST GRANULATION STEP

c

FIRST FIRING STEP

d

SECOND MIXING STEP

e

SECOND GRANULATION STEP

f

SECOND FIRING STEP

END

# FIG. 4

# FIG. 5

## FIG. 6

| No. | FIRST MIXING STEP | | SECOND MIXING STEP | | POSITIVE ELECTRODE ACTIVE MATERIAL | | | EVALUATION |
|---|---|---|---|---|---|---|---|---|
| | GLUCOSE (MASS FRACTION) | CITRIC ACID (MASS FRACTION) | GLUCOSE (MASS FRACTION) | CITRIC ACID (MASS FRACTION) | $V_1$ $(cm^3/g)$ | $V_2$ $(cm^3/g)$ | $V_1/V_2$ $(-)$ | RATE CHARACTERISTICS $(-)$ |
| 1 | 8.0 | 0 | - | - | 0.15 | 0.15 | 1.00 | 100 |
| 2 | 0.7 | 0.6 | 6.0 | 2.0 | 0.16 | 0.14 | 1.14 | 106 |
| 3 | 0.8 | 0.4 | 5.0 | 4.0 | 0.17 | 0.14 | 1.21 | 110 |
| 4 | 0.8 | 0.4 | 2.0 | 10 | 0.17 | 0.10 | 1.70 | 106 |
| 5 | 0.7 | 0.6 | 2.0 | 10 | 0.16 | 0.10 | 1.60 | 101 |
| 6 | 1.0 | 0 | 2.0 | 10 | 0.20 | 0.10 | 2.00 | 113 |
| 7 | 1.0 | 0 | 4.0 | 6.0 | 0.20 | 0.15 | 1.33 | 124 |

Europäisches
Patentamt
European
Patent Office
Office européen
des brevets

## EUROPEAN SEARCH REPORT

**Application Number**

EP 25 22 3884

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 530 595 A (PEARL HUAI GIAU BATTERY CO LTD) 24 May 2022 (2022-05-24) * paragraphs [0099] - [0106]; example 1 * ----- | 1-8 | INV. H01M4/136 H01M4/1397 H01M4/36 H01M4/58 H01M10/0525 |
| X | CN 106 816 582 B (BYD CO LTD) 13 August 2019 (2019-08-13) * example 1 * ----- | 1-7 | |

TECHNICAL FIELDS
SEARCHED      (IPC)

H01M

The present search report has been drawn up for all claims

| Place of search | Date of completion of the search | Examiner |
|---|---|---|
| The Hague | 17 February 2026 | Agra-Gutierrez, C |

EPO FORM 1503 03.82 (P04C01)

**Application Number**

EP 25 22 3884

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

The Search Division considers that the present European patent application does not comply with the requirements of unity of invention and relates to several inventions or groups of inventions, namely:

```
    1. claims: 1-8

        Positive active material and corresponding battery
                        ---


    2. claims: 9, 10

        Method for producing a positive electrode active material
                        ---
```

## ANNEX TO THE EUROPEAN SEARCH REPORT
## ON EUROPEAN PATENT APPLICATION NO.

EP 25 22 3884

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2026

| Patent document cited in search report | | Publication date | Patent family member(s) | Publication date |
|---|---|---|---|---|
| CN 114530595 | A | 24-05-2022 | NONE | |
| CN 106816582 | B | 13-08-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016158566 A